# EUROPÄISCHE PATENTSCHRIFT

(11) **EP 2 384 087 B1**
(45) Veröffentlichungstag und Bekanntmachung des Hinweises auf die Patenterteilung: **05.09.2012**
(21) Anmeldenummer: 10165612.2
(22) Anmeldetag: 11.06.2010
(51) Int. Cl.: F21V 25/04, H01R 13/703, H05B 33/08, H05B 41/285

(54) **LED-Leuchtröhre**
LED fluorescent lamp
Tube luminescent à DEL

(30) Priorität: 27.04.2010 DE 202010006087 U
(43) Veröffentlichungstag der Anmeldung: 02.11.2011
(73) Patentinhaber: Schmelter, Joachim, 59909 Bestwig (DE)
(72) Erfinder: Schmelter, Joachim, 59909 Bestwig (DE)
(74) Vertreter: Reimann, Silke

(56) Entgegenhaltungen:
- WO-A1-2010/042832
- WO-A1-2010/047447
- WO-A2-2009/064099
- AU-A4- 2009 101 044
- DE-B3-102007 015 440

## Beschreibung

Die Erfindung bezieht sich auf eine LED-Leuchtröhre mit einer Vielzahl von Leuchtdioden in der Bauform einer stabförmigen Leuchtstoffröhre mit jeweils zwei Stiftkontakten an ihren Enden zum Einsatz in eine Leuchte mit T-Fassungen sowie einen Starter zum Betrieb der LED-Leuchtröhre.

LED-Leuchtröhren sind in vielen Varianten bekannt. Es werden LED-Lampen mit der Bauform einer stabförmigen Leuchtstofflampe angeboten, die mit einem LED Modul oder mehreren LED-Modulen bestückt sind. Diese "LED Leuchtstofflampen" werden als Ersatz von vorhandenen Leuchtstofflampen eingesetzt, in der Regel mit dem Hinweis auf eine enorme Energieeinsparung mit gleichzeitig hoher Lebensdauer.
Eine Ausführungsform einer LED-Lampe für diesen Zweck ist beispielsweise in der Gebrauchsmusterschrift DE 20 2005 020 471 U1 beschrieben. Auch in den Patentanmeldungen WO 2010/0447 A1 und AU 2009 101 044 A4 sind solche LED Röhren beschrieben.

Der Einsatz einer solchen LED-Lampe erfordert einen schwerwiegenden Eingriff in die Leuchte, damit sie funktionieren kann. Dies ist darin begründet, dass der normale Starter in Verbindung mit dem Vorschaltgerät einen Zündimpuls erzeugt, der nach einem oder mehrmaligem Starten die LED Lampe zerstören würde.
Um die derzeitig bekannten LED-Lampen überhaupt betreiben zu können, muss der Starter ausgebaut und ggf. das Vorschaltgerät überbrückt werden. Eventuell vorhandene Kompensationskondensatoren müssen demontiert werden. Dies stellt so gravierende Eingriffe in die Leuchte dar, dass das z.B. VDE- bzw. EN/EC-Zeichen seine Gültigkeit verliert. Beim Hersteller der Röhre ist damit die Produkthaftung nicht mehr durchsetzbar. In der Anmeldung WO 2010/042832 A1 für eine LED-Röhre sind explizit die Umbaumaßnahmen am Halter beschrieben, um diese Röhre einsetzen zu können.

In der Patentschrift DE 10 2007 015 440 B3 ist ein Leuchtmittelträger für Leuchtstoffröhren beschrieben, die an ihren Enden kurzgeschlossene Stiftpaare besitzen. Die Spannungszuführung erfolgt über beide Enden der Röhre.

Das zweite Problem der derzeit bekannten LED-Lampen besteht darin, dass, wenn einseitig in eine Fassung der Leuchte eingesetzt werden, die Stiftkontakte an den Anschlüssen der Gegenseite Spannung führen. Dadurch ist ein Stromkreislauf über den Körper der einsetzenden Person möglich, die diese Stiftkontakte berührt. Dieser ungewollte Stromkreislauf kann bei der Person zu einem elektrischen Schlag führen. Es wird zwar darauf hingewiesen, dass vor Einbau jeglicher Lampen die Leuchte stromlos zu sein hat, jedoch ist bei fehlender Lampe der Zustand (stromlos - stromführend) nicht einfach festzustellen. Insbesondere besteht diese Gefahr, wenn die an den Leuchten angebrachten Halterungen/Kontakte verdreht sind und die die Lampe einsetzende Person an die freien Kontakte greift der einseitig schon eingesetzten Lampe greift um deren Lage festzustellen.

Es ist die Aufgabe der Erfindung eine LED-Leuchtröhre mit geeignetem Starter sowie eine Leuchte vorzuschlagen, in die die Installation einer LED-Leuchtröhre ohne die genannten Probleme und damit ohne die genannten schwerwiegenden Eingriffe möglich ist.

Diese Aufgabe wird durch die Merkmale der Ansprüche 1, 2 und 3 gelöst.

Die LED-Leuchtröhre zeichnet sich dadurch aus, dass die Stiftkontakte an einem Ende der Röhre intern überbrückt sind und kein weiterer Kontakt zu dem Leuchtdioden im Inneren besteht. Die Stiftkontakte auf der gegenüberliegenden Seite dienen der Spannungszuführung für die Leuchtdioden, die in einem Array zusammengefasst sind. Durch diese Bauart wird vermieden, dass Spannungen bei dem Einsetzen der LED-Leuchtröhre an freien Stiftkontakten anliegen können und die Gefahr eines Stromkreislaufes besteht.
Die Spannungszufuhr an die Stiftkontakte wird über den geschlossenen Stromkreis über einen Starter mit Brücke und über die interne Brücke an den zweiten Stiftkontakten erreicht.

Das Anschlussschema von herkömmlichen Leuchtstoffröhren wird in Fig. 1, der Anschluss von üblichen LED-Lampen in Fig. 2 und das Anschlussschema der erfindungemäßen LED-Leuchtröhre in Fig. 3 gezeigt. Der Einbau einer LED-Leuchtröhre in eine Langfeldleuchte ist in den Figuren 4 und 5 dargestellt.

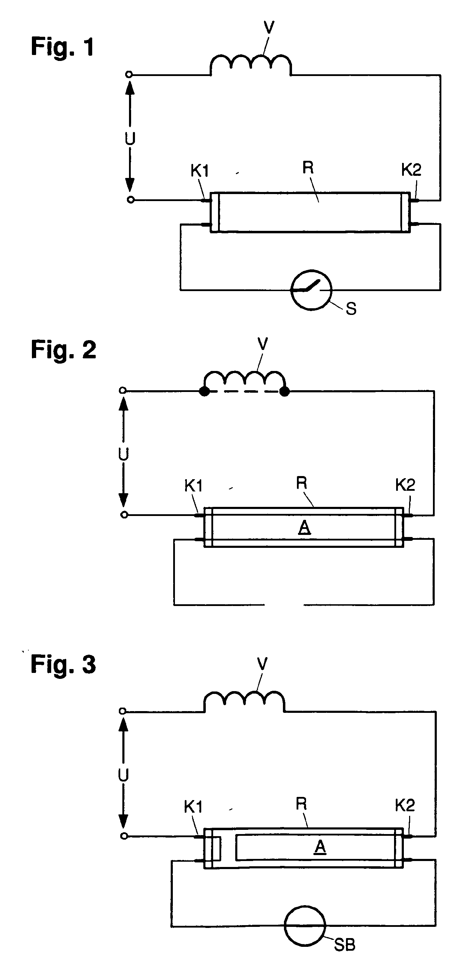

Fig.1 zeigt die Anschlussart einer heutzutage millionenfach in Betrieb befindlichen Leuchtstofflampe R mit separatem Starter S. Zur besseren Übersichtlichkeit wurde eine stabförmige Leuchtstofflampe R skizziert, die an einer Eingangsspannung U betrieben wird. Dies kann eine Spannung von 230V Wechselstrom sein, es sind aber auch andere Eingangsspannungen möglich.
Über das Vorschaltgerät V und en Starter S wird eine Zündspannung erzeugt und die Betriebsspannung über die Stiftkontakte K1, K2 zugeführt.

Fig. 2 zeigt die derzeit gebräuchliche Anschlussart einer LED-Lampe R unter Nutzung einer ursprünglich für eine Leuchtstoffröhre gebauten Leuchte L wie sie heutzutage auf dem Markt zu finden ist. Es sind die gleichen Spannungsverhältnisse wie in Fig. 1 zugrunde gelegt. Es ist zu erkennen, dass die Betriebsspannung über die Kontaktstifte K1 und K2 dem Leuchtdioden-Array A in der Röhre R zugeführt werden. Es liegt also an beiden Seiten der Röhre R Spannung an. Dabei kann das Vorschaltgerät V überbrückt sein oder sich weiterhin in Reihenschaltung befinden. Der Starter muss hier entfernt sein.

In Fig. 3 ist das Anschlussschema mit der LED-Leuchtröhre R und dem zugehörigen Starter SB dargestellt. Der Stromkreis für den Betrieb der LED-Leuchtröhre R ist über das Vorschaltgerät L, die Stiftkontakte K2, das Leuchtdioden-Array A, den überbrückten Starter SB, und die intern gebrückten Stiftkontakte K1 geschlossen.

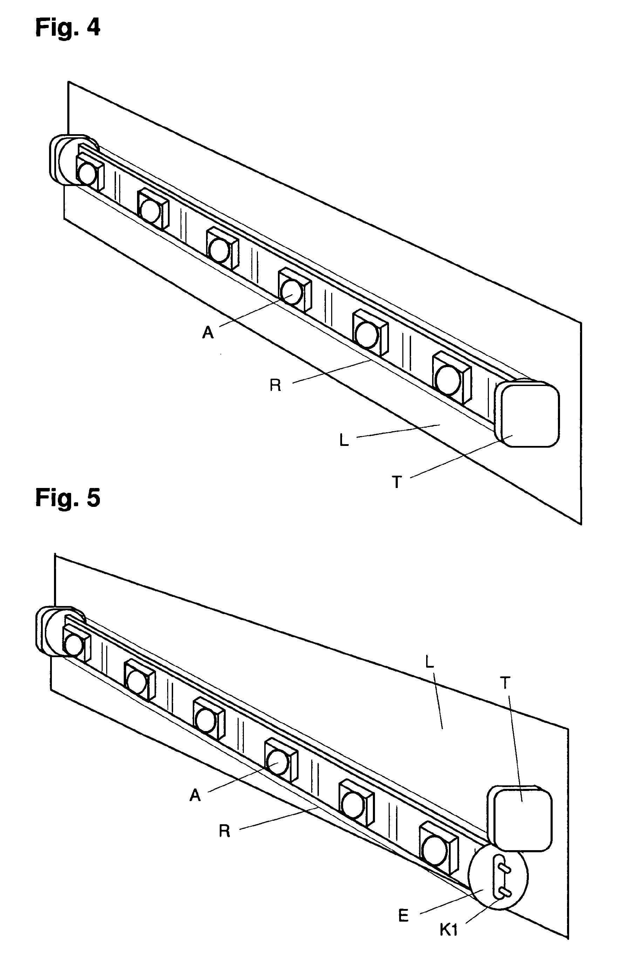

Fig. 4 zeigt die eingesetzte LED-Leuchtröhre R mit den Leuchtdioden A in einer Leuchte L. Sie wird an beiden Seiten durch die T-Fassungen T gehalten

In Fig. 5 ist die gleiche Leuchte L wie in Fig. 4 mit einer LED-Leuchtröhre R im halb eingesetzten Zustand dargestellt. Dabei ist zu erkennen, dass die Stiftkontakte K1 an dem freien Ende E der LED-Leuchtröhre beim Einsetzen berührt werden können und die Gefahr eines Stromschlages nicht ausgeschlossen ist, wenn eine Spannungs-Verbindung zu dem LED-Array A gegeben ist.

### Bezugszeichen

- A: LED-Array
- E: Ende der Leuchtröhre
- K1, K2: Stiftkontakte
- L: Leuchte
- R: Leuchtröhre
- S: Starter
- SB: Starter mit Brücke
- V: Vorschaltgerät

## Patentansprüche

1. LED-Leuchtröhre (R) mit einer Vielzahl von Leuchtdioden (A) in der Bauform einer stabförmigen Leuchtstoffröhre mit jeweils zwei Stiftkontakten (K1, K2) an ihren Enden (E) zum Einsatz in eine Leuchte (L) mit T-Fassungen (T), **dadurch gekennzeichnet, dass** die beiden Stiftkontakte (K1) an einem Ende der LED-Leuchtröhre (R) in ihrem Inneren überbrückt sind und keinen Anschluss zu den Leuchtdioden (A) besitzen und die beiden Stiftkontakte (K2) an dem anderen Ende der Spannungsversorgung der Leuchtdioden (A) dienen.

2. Starter (SB) mit zwei Kontaktstiften zum Einsatz in eine Leuchte (L) mit T-Fassungen (T), die mit einer LED-Leuchtröhre (1) nach Anspruch 1 versehen ist,
**dadurch gekennzeichnet, dass**
die Kontaktstifte in dem Starter (SB) überbrückt sind.

3. Leuchte (L) mit einer oder mehreren LED-Leuchtröhren (R) gemäß Anspruch und 1 und zugehörigen Startern (SB) nach Anspruch 2.

## Claims

1. LED tube light (R), with a plurality of light emitting diodes (A), built like a rod-shaped fluorescent tube with respectively two pin contacts (K1, K2) at its ends (E), for use in a lamp (L) with T-sockets (T), **characterized in that** the two pin contacts (K1) at one end at the inside of the LED tube light (R) are bridged and have no connection to the light emitting diodes (A) and the two pin contacts (K2) at the other end serve as power supply for the light-emitting diodes (A).

2. Starter (SB) with two contact pins for use in a lamp (L) with T-sockets (T) which is provided with an LED tube light (R) according to claim 1, **characterized in that** the pins in the starter (SB) are bridged.

3. Lamp (L) with one or more LED tube lights (R) according to claim 1 and with the corresponding starters (SB) according to claim 2

## Revendications

1. Tube luminescent à DEL (R), avec une pluralité de diodes électroluminescentes (A), construit comme un tube fluorescent en forme de tige avec respectivement deux broches de contact (K1, K2) à ses extrémités (E) pour l'utilisation dans une lampe (L) avec des prises T (T), **caractérisé en ce que** les deux broches de contact (K1) à l'une extrémité du tube luminescent à DEL (R) sont pontées à l'intérieur et n'ont aucun rapport aux diodes électroluminescentes (A), et que les deux broches de contact (K2) à l'autre extrémité servent d'alimentation électrique pour les diodes électroluminescentes (A).

2. Starter (SB) avec deux broches de contact pour utilisation dans une lampe (L) avec des prises T (T), qui est équipé d'un tube luminescent à DEL (R) selon la revendication 1, **caractérisé en ce que** les broches de contact dans le Starter (SB) sont pontées.

3. Lampe (L) avec un ou plusieurs tubes lumineux à DEL (R) selon la revendication 1 et avec des starters correspondants (SB) selon la revendication 2.
